# EUROPEAN PATENT SPECIFICATION

(11) **EP 3 616 528 B1**
(45) Date of publication and mention of the grant of the patent: **12.07.2023**
(21) Application number: 19194466.9
(22) Date of filing: 29.08.2019
(51) Int. Cl.: A23G 9/22, A23G 9/28

(54) **ICE CREAM DISPENSING MACHINE**
EISCREMEMASCHINE
MACHINE DISTRIBUTRICE DE GLACE

(30) Priority: 29.08.2018 IT 201800008232
(43) Date of publication of application: 04.03.2020
(73) Proprietor: Valmar Global VSE ZA Sladoled D.O.O., 5293 Volcja Draga (SI)
(72) Inventor: JEJCIC, Valter, 5000 NOVA GORICA (SI)
(74) Representative: Bellemo, Matteo

(56) References cited:
- EP-A1- 3 351 113
- JP-A- S6 359 846
- US-A- 4 861 255
- US-B1- 6 250 794

## Description

### CROSS-REFERENCE TO RELATED APPLICATIONS

This patent application claims priority from Italian patent application no. 102018000008232 filed on August 29, 2018.

### TECHNICAL FIELD

The present invention relates to an ice-cream dispenser machine.

More in detail, the present invention relates to a semiautomatic machine adapted to pour handmade ice cream inside disposable cups and similar single-dose containers.

Machine to which the following disclosure will explicitly refer without thereby losing its general character. The invention is set out in the appended set of claims.

### BACKGROUND ART

To meet the demands of ice-cream parlours that daily prepare and sell a very large number of single-dose cups of handmade ice cream, in the recent years some manufacturers of machinery for the production of handmade ice cream have realized small manually-operated semi-automatic machines that are capable to quickly pour ice cream into a common single-dose cup.

These semi-automatic machines are basically made up of a cylindrical cup-shaped container which is dimensioned so as to contain 3-20 litres of handmade ice cream and is provided, on the bottom, with a small dispensing nozzle from which the ice cream comes out; of a movable piston, which is inserted roughly in fluid-tight manner inside the cup-shaped container, with the capability of moving axially inside the container; and of an electrically-operated moving mechanism which is capable of moving the piston inside the cup-shaped container, towards the bottom of the container and vice versa, so as to push the ice cream slowly outside the container through the dispensing nozzle.

Unfortunately, the ice-cream dispenser machines described above have shown great operating restrictions that have prevented their spread on the market.

In fact, to quickly fill up an ice-cream cup, the machine's piston must exert a very high pressure on the ice cream present inside the container. The pressure required, however, excessively compacts the handmade ice cream inside the container and drastically reduces the percentage of air present in the product coming out from the nozzle, thus compromising the creaminess and lightness typical of handmade ice cream.

Moreover, when the ice cream is poured inside the cup-shaped container, air bubbles form inside the container which make quite difficult to precisely dose the ice cream in the single-dose cups.

Finally, too high a pressure can lead to a subsequent rapid and sudden softening of the handmade ice cream, with all the problems this entails.

JPS6359846 A discloses an ice-cream dispenser machine according to the preamble of Claim 1.

### DISCLOSURE OF INVENTION

Aim of the present invention is therefore to provide an ice-cream dispenser machine adapted to fill up single-dose cups with ice cream, which is free from the drawbacks listed above.

In compliance with these aims, according to the present invention there is realized an ice-cream dispenser machine as defined in claim 1 and preferably, though not necessarily, in any one of the claims dependent on it.

### BRIEF DESCRIPTION OF THE DRAWINGS

The present invention will now be described with reference to the annexed drawings showing a non-limiting embodiment, in which:
- Figure 1 is an isometric view of an ice-cream dispenser machine realized according to the teachings of the present invention, with parts removed for clarity's sake;
- Figure 2 is a side view of the dispenser machine shown in Figure 1, sectioned along the vertical midplane and with parts removed for clarity's sake;
- Figure 3 is a partially exploded isometric view of the dispenser machine shown in Figures 1 and 2;
- Figure 4 is an enlarged scale view of the central section of the dispenser machine shown in Figure 2, with parts removed for clarity's sake; whereas
- Figure 5 is an enlarged scale view of the central section of the dispenser machine shown in Figures 2 and 4, with the cup-shaped container partially disassembled and with parts removed for clarity's sake.

### BEST MODE FOR CARRYING OUT THE INVENTION

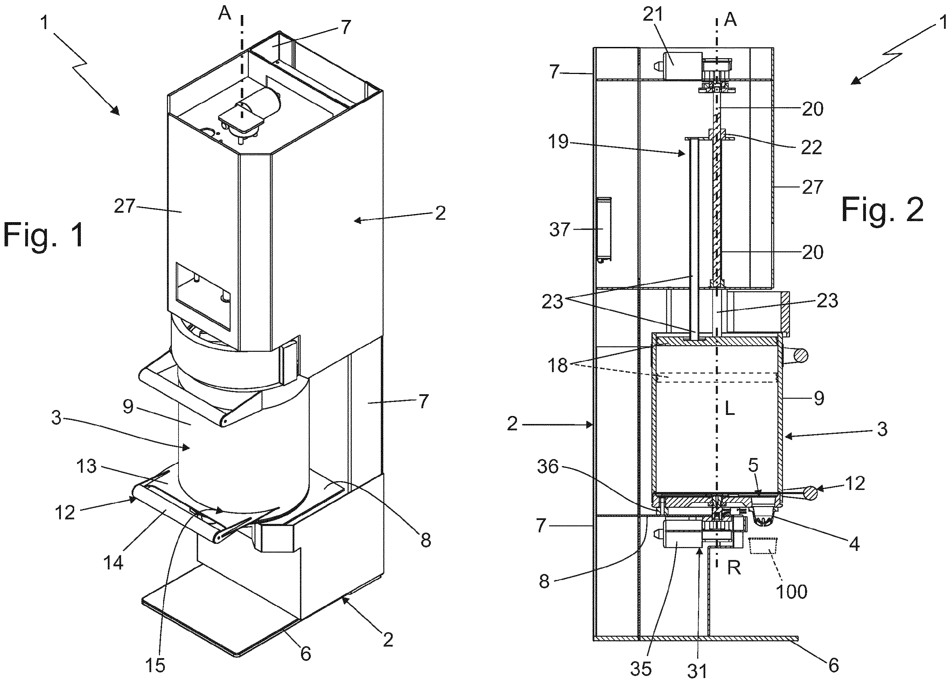

With reference to Figures 1, 2 and 3, the reference number 1 denotes as a whole a manually-operated ice-cream dispenser machine that can advantageously be used to pour ice cream into a generic cup 100, preferably of disposable type, or other similar single-dose container.

The dispenser machine 1 basically comprises: a cup-shaped container, which is adapted to contain a large amount of handmade ice cream and is provided, on the bottom, with a dispensing nozzle from which the ice cream can come out of the container; a piston, which is accommodated in axially slidable manner inside the container; and a manually-controlled moving system which is adapted to selectively move the piston axially inside the cup-shaped container, so as to push the ice cream out of the container through the dispensing nozzle.

More in detail, the dispenser machine 1 preferably comprises: a supporting framework 2, rigid and preferably made of metal material, which is preferably structured/ dimensioned to rest on a generic substantially-horizontal resting surface; and a substantially rigid and preferably substantially cylindrical in shape, cup-shaped container 3 which is firmly fixed to the supporting framework 2 so as to be substantially coaxial to a given reference axis A, and is provided, on the bottom, with a small dispensing nozzle 4 through which the ice cream can come out of the container 3.

In other words, the dispensing nozzle 4 is arranged on the bottom of the cup-shaped container 3, at the outlet mouth of a through duct 5 that crosses the entire thickness of the bottom wall of the cup-shaped container 3 and ends inside the cup-shaped container 3. Preferably, the dispensing nozzle 4 is additionally fixed to the bottom of the cup-shaped container 3 in a rigid and stable, though easily detachable manner, so as to be quickly replaceable.

Moreover, the cup-shaped container 3 is preferably dimensioned to contain an amount of handmade ice cream greater than 2 litres, and is preferably fixed to the supporting framework 2 in a substantially vertical position, with the mouth turned upwards.

In other words, reference axis A is preferably substantially vertical.

Preferably, the cup-shaped container 3 is furthermore fixed/fixable on the supporting framework 2 in a rigid and stable, though easily detachable manner.

In the example shown, in particular, the cup-shaped container 3 is preferably made of polymeric material, and is preferably dimensioned to contain an amount of ice cream ranging between 5 and 20 litres.

The supporting framework 2, on the other hand, is preferably structured so as to rise from the corresponding support surface in a substantially vertical direction.

More in detail, the supporting framework 2 preferably comprises: a support base 6 preferably having a plate-like structure, which is adapted to be arranged in stable resting on any horizontal support surface; and an oblong upright 7, preferably substantially parallelepiped in shape and preferably with a box-like structure, that rises from the support base 6 in a direction locally substantially perpendicular to the lying plane of support base 6, i.e. in a substantially vertical direction.

In other words, the upright 7 extends parallel to the axis A.

The cup-shaped container 3, in turn, is preferably fixed on upright 7 spaced above the supporting base 6.

More in detail, the cup-shaped container 3 is preferably arranged in abutment on a protruding shelf 8, preferably with a plate-like structure, which cantileverly extends from the upright 7 substantially parallel to the support base 6, i.e. horizontally.

In other words, the protruding shelf 8 is substantially perpendicular to axis A.

Preferably, the cup-shaped container 3 is additionally fixed to the upright 7, or rather to the protruding shelf 8 of upright 7, in a rigid and stable though easily detachable manner.

Moreover, with reference to Figures 1, 2 and 3, the cup-shaped container 3 is preferably divided into a large, preferably substantially cylindrical in shape, straight tubular barrel 9 which is preferably externally provided with a large transverse handle 10; and in a substantially plate-like and preferably roughly circular-shaped, breech 11 that is fixed/coupled to the lower end of tubular barrel 9 substantially in fluid-tight manner, so as to form the bottom of cup-shaped container 3. Preferably, the breech 11 is additionally coupled to the tubular barrel 9 in a rigid and stable, though easily detachable manner.

In greater detail, breech 11 preferably lies on a plane substantially orthogonal to axis A, whereas tubular barrel 9 extends parallel to axis A.

Preferably, breech 11 and tubular barrel 9 are also coaxial to the axis A.

Moreover, the breech 11 is preferably firmly fixed in abutment on the supporting framework 2, or rather on the protruding shelf 8 of upright 7, in a substantially horizontal position, and the tubular barrel 9 is preferably coupled/fitted on the breech 11 in a substantially vertical position and so as to be directly supported by the breech 11.

Preferably, the breech 11 is additionally fixed to the supporting framework 2, or rather to the protruding shelf 8 of upright 7, in a rigid and stable though easily detachable manner.

The dispensing nozzle 4, in turn, is preferably fixed on the breech 11 so as to cantileverly protrude from the breech 11.

More in detail, the dispensing nozzle 4 is preferably fixed in a rigid and stable, though easily detachable manner on the lower face of the breech 11, at closure of the mouth of a straight pass-through hole that crosses the entire thickness of the breech 11, preferably has a converging profile towards the dispensing nozzle 4, and forms the through duct 5.

Moreover, the dispensing nozzle 4 preferably consists of a cup-shaped body which preferably has a concavity with a parabolic profile, and is provided on the bottom with a central pass-through hole preferably having a radiated shape.

With reference to Figures 1, 2, 3 and 5, the dispenser machine 1 preferably further comprises a manually-operated removable shutter 12 which is insertable in the straight tubular barrel 9 immediately above the breech 11, so as to be able to selectively close/plug the tubular barrel 9 in substantially fluid-tight manner, in addition or as an alternative to the breech 11.

Preferably the removable shutter 12 is moreover insertable in the straight tubular barrel 9 in guillotine manner, preferably orthogonally to the longitudinal axis of the tubular barrel 9, i.e. perpendicularly to the longitudinal axis L of container 3.

More in detail, the removable shutter 12 preferably comprises: a substantially rigid plate-like blade 13, preferably made of metallic material, which is adapted to be inserted in guillotine manner in the tubular barrel 9 preferably orthogonally to the longitudinal axis of tubular barrel 9, so as to be able to close/plug the tubular barrel 9 in a substantially fluid-tight manner; and a handle 14 that is preferably made of plastic material, and is rigidly fixed to the body of blade 13, preferably close to a side edge of the blade 13, so as to allow a person to manually insert and extract the plate-like blade 13 into/from the tubular barrel 9.

More in detail, the tubular barrel 9 is preferably provided with a transversal slot 15 that extends on its side wall, immediately above the breech 11, while remaining coplanar to a reference plane that is preferably locally substantially orthogonal to the longitudinal axis of the tubular barrel 9, i.e. substantially orthogonal to the longitudinal axis L of container 3.

The plate-like blade 13, in turn, is adapted to engage in sliding manner the transversal slot 15, and is preferably dimensioned so as to be able to close the whole clearsection of tubular barrel 9, so as to substantially fluid-tight plug the tubular barrel 9 when completely inserted into the tubular barrel 9.

In other words, a part of plate-like blade 13 is substantially complementary in shape to that of the clear cross-section of tubular barrel 9.

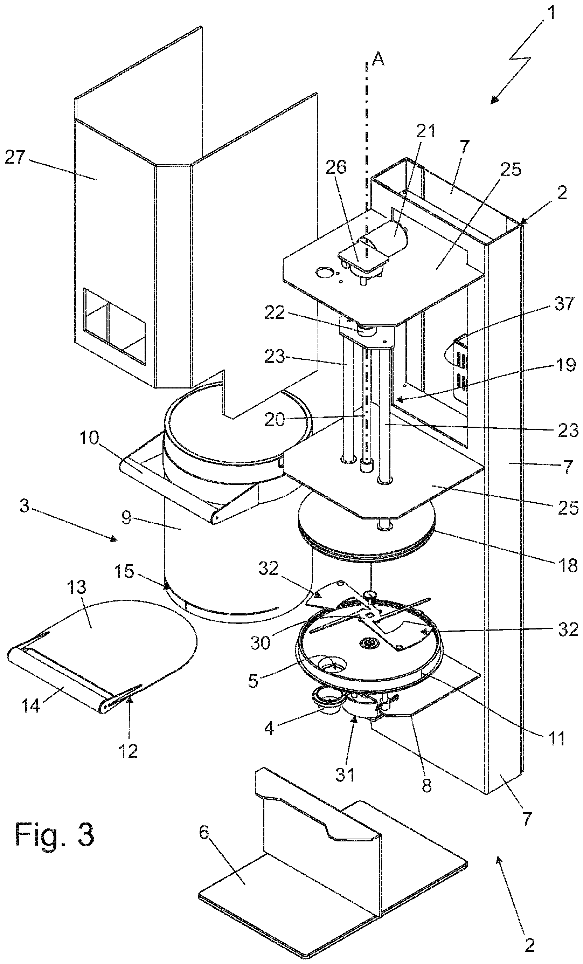

With reference to Figures 2 and 3, the ice-cream dispenser machine 1 additionally comprises: a movable piston 18 which is inserted inside the cup-shaped container 3, or rather inside the tubular barrel 9 of cup-shaped container 3, in a substantially fluid-tight manner and with the capability of moving inside the same container 3 parallel to the longitudinal axis L of the container; and a manually-controlled and preferably electrically-operated, piston displacing device 19 which is capable of moving, on command, the piston 18 inside of the cup-shaped container 3 to and from the bottom of the container 3, or rather to and from the breech 11 of container 3, so as to selectively push the ice cream out of container 3 through the dispensing nozzle 4.

Preferably, the displacing device 19 is additionally fixed directly to the supporting framework 2, or rather to the upright 7 of supporting framework 2, spaced above the cup-shaped container 3, and preferably directly supports the piston 18.

In the example shown, in particular, the movable piston 18 preferably basically consists of a discoidal body which is substantially complementary in shape to the clear cross-section of cup-shaped container 3, or rather of tubular barrel 9, and is preferably made of plastic material.

The displacing device 19, on the other hand, preferably comprises: a threaded shaft 20 which extends coaxial or in any case parallel to axis A, i.e. parallel to the longitudinal axis L of container 3, spaced above the cup-shaped container 3, and has its two axial ends fixed in axially rotatable manner on the supporting framework 2; an electric motor 21 which is mechanically connected to the threaded shaft 20 so as to be able to drive into rotation, on command, the shaft 20 about its longitudinal axis selectively clockwise or anticlockwise; and a female-screw body 22 which is screwed onto a segment of shaft 20 without the possibility of rotating and is rigidly connected to the underlying piston 18, preferably by means of one or more rectilinear rods or struts 23 that extend parallel to the longitudinal axis of the threaded shaft 20 and have the lower end in abutment against the piston 18.

The descent of the female-screw body 22 along the shaft 20 is thus transmitted to the piston 18 by the struts 23.

In greater detail, in the example shown the two axial ends of threaded shaft 20 are fixed in axially rotatable manner on a pair of preferably substantially plate-like, protruding shelves 25 that cantileverly extend from upright 7 perpendicularly to axis A, so as to be parallel and facing each other, and are vertically aligned with the protruding shelf 8 that directly supports the container 3.

The electric motor 21, on the other hand, is preferably located above the upper protruding shelf 25, and is preferably connected to the threaded shaft 20 via a gear reducer 26.

Finally, the female-screw body 22 is preferably connected to the piston 18 by means of three rectilinear rods or struts 23 parallel and adjacent to one another, which are arranged around the threaded shaft 20, preferably at the vertices of a triangle. Preferably, the lower end of each rectilinear rod or strut 23 is additionally fixed to the body of piston 18 in a rigid and stable, though easily detachable manner.

With reference to Figures 1, 2 and 3, the supporting framework 2 preferably additionally includes a substantially rigid, protective casing or covering 27 which is fixed to the upright 7 so as to conceal and protect the displacing device 19, and which preferably basically consists of a plate-like panel preferably made of metallic material, which is substantially U-bent and is fitted on the two protruding shelves 25 so as to close the volume between the two protruding shelves 25.

With reference to Figures 2, 3, 4 and 5, finally the ice-cream dispenser machine 1 also comprises: an impeller 30 preferably having a plate-like structure, which is arranged inside the cup-shaped container 3 substantially grazing the bottom of container 3, with the capability of rotating about a rotation axis R locally substantially perpendicular to the bottom of container 3; and a preferably electrically -operated motor assembly 31 or similar, which is preferably located outside cup-shaped container 3 and is mechanically connected to the impeller 30 so as to be able to drive, on command, the same impeller 30 into rotation about axis R.

Moreover, the motor assembly 31 is adapted to drive into rotation the impeller 30 about axis R with an angular speed preferably lower than 200 rpm, and optionally ranging between 10 and 150 rpm.

In greater detail, the impeller 30 is fixed to the bottom of cup-shaped container 3 so as to be able to rotate about an axis R preferably locally substantially coincident or in any case parallel to the longitudinal axis L of container 3 and/or to axis A.

The impeller 30 is moreover arranged on the bottom of cup-shaped container 3, or rather on the upper face of breech 11, at a given distance from the inlet mouth of the through duct 5, and is provided with at least one oblong and preferably also substantially plate-like, radial blade 32 which extends substantially skimmed over to the bottom of container 3, i.e. perpendicularly to axis R, up to the inlet mouth of through duct 5, so as to skim/graze the same inlet mouth when the impeller rotates about axis R.

In other words, the inlet mouth of through duct 5 is preferably arranged on the bottom of cup-shaped container 3 in an eccentric position with respect to the longitudinal axis L of container 3.

Preferably, the blade 32 is furthermore dimensioned so as to reach and preferably also extend beyond the inlet mouth of through duct 5.

Furthermore, according to the invention, the blade 32, preferably the distal end of blade 32, is dimensioned so as to cover, when arranged immediately above the inlet mouth of through duct 5, substantially the entire area of the inlet mouth of through duct 5.

When arranged at the inlet mouth of through duct 5, therefore the blade 32 is preferably adapted to prevent the entry/passage of the ice cream into the through duct 5.

In other words, the blade 32 operates like a guillotine shutter.

The motor assembly 31, in turn, is structured so as to be able to arrange, at rest, the impeller 30 with the or one of its radial blades 32 that extends above the inlet mouth of through duct 5, to cover the same inlet mouth.

In other words, the motor assembly 31 is adapted to stop rotation of impeller 30 in a given angular position, in which the or one of the radial blades 32 of impeller 30 extends over the inlet mouth of through duct 5 so as to substantially completely close/cover the same inlet mouth.

With reference to Figures 3, 4 and 5, preferably the impeller 30 is moreover fixed in angularly rigid manner on a support pin 33, which extends, in pass-through manner, through the bottom of cup-shaped container 3, and the motor assembly 31 is located outside of the cup-shaped container 3, preferably beneath the bottom of the container, and is adapted to drive into rotation the support pin 33.

The support pin 33 is therefore coaxial to the impeller rotation axis R.

In greater detail, in the example shown the impeller 30 preferably lies on a plane substantially perpendicular to the longitudinal axis L of the cup-shaped container 3, and is preferably fitted in angularly rigid manner on a support pin 33 that extends coaxial to the longitudinal axis L of container 3 and is accommodated in pass-through and axially rotatable manner in the breech 11.

Preferably, the bladed impeller 30 is additionally provided with two large radial blades 32 that extend radially on opposite sides of rotation axis R and are preferably substantially specular in shape.

The motor assembly 31, on the other hand, is preferably stably fixed on the supporting framework 2, beneath the breech 11 of cup-shaped container 3, and is adapted to drive into rotation the support pin 33.

Preferably, the motor assembly 31 is moreover connected to the support pin 33 via a decomposable mechanical joint, so as to be easily detachable from the support pin 33.

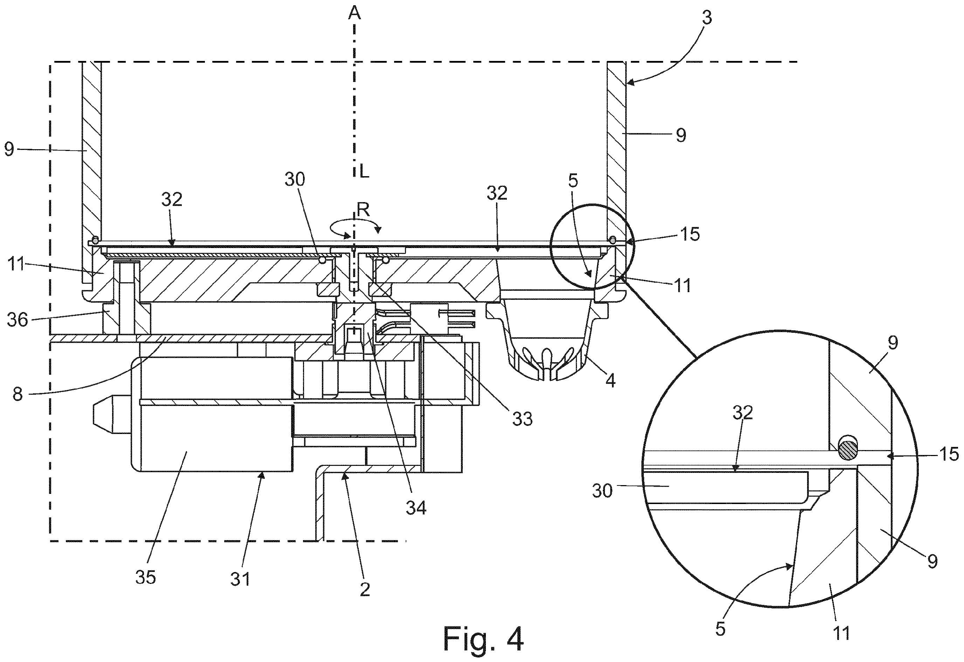

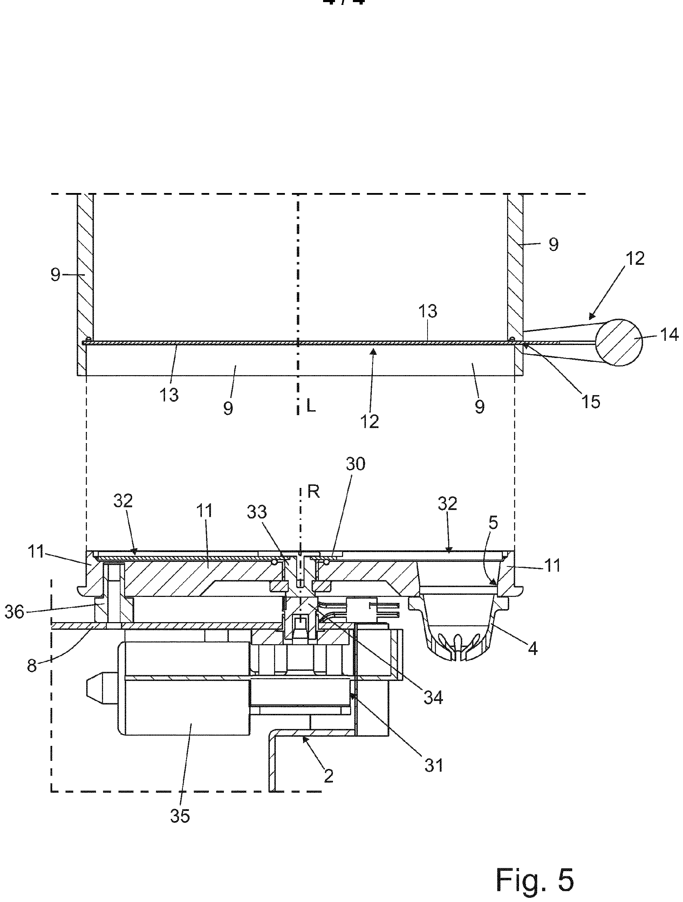

In greater detail, with particular reference to Figures 4 and 5, in the example shown the motor assembly 31 preferably comprises: a rotating hub 34 which is fixed to the upper face of protruding shelf 8 so as to be substantially coaxial to axis A and to the longitudinal axis L of the superjacent container 3, with the capability of rotating about its longitudinal axis; and an electric motor 35 which is preferably stably fixed to the protruding shelf 8, underneath the protruding shelf 8, and is mechanically connected to the hub 34 so as to be able to drive the latter into rotation about its longitudinal axis.

The support pin 33, in turn, is preferably structured/ shaped so as to be able to engage in, or in any case couple with, the hub 34 in angularly rigid and easily detachable manner, so as to be able to rotate together with hub.

Preferably, the electric motor 35 is moreover structured so as to always stop in a given angular position in which the or one of the radial blades 32 of the impeller 30 is arranged immediately above the inlet mouth of through duct 5, so as to close the inlet mouth of through duct 5.

Alternatively, the motor assembly 31 can be provided with a position sensor (not shown) which is able to determine when the blade or one of the radial blades 32 of impeller 30 is immediately above the inlet mouth of through duct 5, and can therefore close the inlet mouth of through duct 5.

With reference to Figures 4 and 5, preferably the supporting framework 2 is additionally provided with at least one anti-rotation locking member which is adapted to couple with the cup-shaped container 3 to prevent any rotation of cup-shaped container 3 about the longitudinal axis L.

More in detail, the dispenser machine 1 is preferably provided with a locking pin 36 that cantileverly sticks out from projecting shelf 8 parallel and in eccentric position with respect to axis A, i.e. in a vertical direction, and is adapted to engage into the cup-shaped container 3, or rather into the breech 11 of cup-shaped container 3, in an eccentric position with respect to support pin 33, so as to prevent rotation of cup-shaped container 3 about its longitudinal axis L.

With reference to Figures 2 and 3, preferably the dispenser machine 1 is finally provided with an electronic control unit 37 which is adapted to drive the displacing device 19, or rather the electric motor 21, and the motor assembly 31, or rather the electric motor 35, so as to be able to selectively push the ice cream out of cup-shaped container 3 through the dispensing nozzle 4 and preferably also plug the dispensing nozzle 4 when the machine is not in use.

Preferably, the electronic control unit 37 is additionally adapted to drive the displacing device 19 and the motor assembly 31 on the basis on the signals coming from a manually-operated control member (not shown), for example a push button, which is preferably located on a control panel (not shown) preferably placed on the front of the machine.

Obviously, the manually-operated control member may also be a pedal, a lever or a presence sensor that communicates with the electronic control unit 37 and is able to detect and signal when a person manually places a cup 100 immediately beneath the dispensing nozzle 4.

Preferably, the electronic control unit 37 is finally programmed/configured so as to activate and deactivate the motor assembly 31 and the displacing device 19 according to a given sequence.

General operation of ice-cream dispenser machine 1 is easily inferable from the above.

Assuming that the cup-shaped container 3 is filled with handmade ice cream and that the removable shutter 12 is not inserted in the cup-shaped container 3, the combined action of piston 18 and of bladed impeller 30 pushes the ice cream out of the cup-shaped container 3 through the dispensing nozzle 4.

The advantages due to the presence of the bladed impeller 30 are remarkable.

Experimental tests have shown that rotation of the bladed impeller 30 simultaneously to the lowering of piston 18 allows to dose much more precisely the ice cream coming out of dispensing nozzle 4.

Furthermore, the action of bladed impeller 30 allows to not excessive reduce the amount of air incorporated in the ice cream coming out of dispensing nozzle 4. Circumstances that allow preserving the physical characteristics (viscosity and density) and the typical organoleptic properties of handmade ice cream.

In other words, the bladed impeller 30 counteracts the negative effects due to the thrust of piston 18, allowing the dispenser machine 1 to quickly pour/pump the handmade ice cream into the cup 100 without compromising the physical and organoleptic properties of the handmade ice cream.

More in detail, the action of bladed impeller 30 prevents the ice cream from compacting and remaining blocked for a long time on the bottom of the cup-shaped container 3, in the areas furthest from the dispensing nozzle 4.

Moreover, the fact that the blade 32 can prevent the ice cream from reaching the dispensing nozzle 4 avoids the accidental release of the ice cream when the piston 18 is stationary.

Finally, the possibility of easily separating the tubular barrel 9 of cup-shaped container 3 from the underlying breech 11 enables a single bladed impeller 30 to be shared between several cup-shaped containers 3.

The user, in fact, can rapidly move the breech 11 with the bladed impeller 30 from one container to the other, after having inserted the removable shutter 12 in the cup-shaped container 3 to close/plug the lower end of the straight tubular barrel 9 immediately above the breech 11, and after having subsequently detached/separated the tubular barrel 9 from the breech 11.

For example, in a first not-shown variation, the displacing device 19 may comprise one or more hydraulic or pneumatic cylinders arranged parallel to the axis A, and an electrically-controlled pressurized-fluid distributor which is adapted to regulate the inflow of air or any other pressurized fluid to the hydraulic or pneumatic cylinder(s) .

Furthermore, in a second less-sophisticated and not-shown variation, tubular barrel 9 and breech 11 form a single body.

In this case, the cup-shaped container 3 may lack the transversal slot 15 adapted to be engaged by the removable shutter 12.

Finally, in a third less-sophisticated and not-shown variation, the dispenser machine 1 lacks the electronic control unit 37, and activation and deactivation of displacing device 19 and motor assembly 31 are controlled directly by the user, via specific and preferably also discrete manually-operated control members.

## Claims

1. An ice-cream dispenser machine (1) comprising: a cup-shaped container (3), which is adapted to contain the handmade ice cream and is provided, on the bottom, with a dispensing nozzle (4) from which the ice cream exits; a piston (18) which is housed in axially sliding manner inside the cup-shaped container (3); manually-controlled piston displacing means (19) which are adapted to selectively move the piston (18) inside the cup-shaped container (3) in order to push the ice cream out of the container (3) through the dispensing nozzle (4); an impeller (30) which is located inside the cup-shaped container (3) substantially grazing the bottom of the container (3), with the capability of rotating about a given rotation axis (R); and a motor assembly (31) which is adapted to drive into rotation the impeller (30) about said rotation axis (R) ;
the ice-cream dispenser machine (1) **being characterised in that** the inlet mouth of a through duct (5) that ends at the dispensing nozzle (4) is located on the bottom of the cup-shaped container (3) at a given distance from the impeller (30); **in that** said impeller (30) is provided with at least one radial blade (32) that extends substantially grazing the bottom of the container (3), up to the inlet mouth of said through duct (5), thus skimming/grazing said inlet mouth when the impeller (30) is in rotation; **in that** said blade (32) is dimensioned so as to cover, when arranged over the inlet mouth of the through duct (5), substantially the whole area of said inlet mouth; **and in that** the motor assembly (31) is adapted to arrange, when at rest, the impeller (30) so that said blade or one of said blades (32) extends over the inlet mouth of said through duct (5).

2. Ice-cream dispenser machine according to claim 1, wherein the impeller (30) is fixed in axially rotatable manner to the bottom of said cup-shaped container (3) .

3. Ice-cream dispenser machine according to claim 1 or 2, wherein said blade (32) is dimensioned so as to reach and substantially extend beyond the inlet mouth of the through duct (5).

4. Ice-cream dispenser machine according to any one of the preceding claims, wherein the inlet mouth of the through duct (5) that ends at the dispensing nozzle (4) is located on the bottom of the cup-shaped container (3) in an eccentric position with respect to a longitudinal axis (L) of said container (3).

5. Ice-cream dispenser machine according to any one of the preceding claims, wherein said blade (32) has a plate-like structure.

6. Ice-cream dispenser machine according to any one of the preceding claims, wherein the impeller (30) is fixed in angularly rigid manner on a support pin (33) that extends, in pass-through manner, through the bottom of the cup-shaped container (3); and wherein the motor assembly (31) is placed outside of the cup-shaped container (3) and is adapted to drive into rotation said support pin (33).

7. Ice-cream dispenser machine according to any one of the preceding claims, wherein the machine is provided with a supporting framework (2) and the cup-shaped container (3) is fixed on said supporting framework (2) in a substantially vertical position.

8. Ice-cream dispenser machine according to claim 7, wherein the motor assembly (31) is firmly fixed to the supporting framework (2), beneath the cup-shaped container (2) .

9. Ice-cream dispenser machine according to claim 7 or 8, wherein the cup-shaped container (3) is fixed on said supporting framework (2) in removable manner, and the motor assembly (31) is connected to the support pin (33) via a mechanical dismountable joint, so as to be easily detachable from the support pin (33).

10. Ice-cream dispenser machine according to any one of the preceding claims, wherein the cup-shaped container (3) is divided into a straight tubular barrel (9) and a breech (11), which is substantially liquid-tight fixed/ coupled to the lower end of said straight tubular barrel (9) so as to form the bottom of the cup-shaped container (3).

11. Ice-cream dispenser machine according to claim 10, wherein said breech (11) is coupled to said straight tubular barrel (9) in a rigid and stable though easily detachable manner.

12. Ice-cream dispenser machine according to claim 11, wherein the machine additionally includes a manually-operated removable shutter (12) which is insertable in a guillotine manner in the straight tubular barrel (9) above the breech (11), so as to selectively close/plug the straight tubular barrel (9) substantially in liquid-tight manner, in addition or alternatively to the breech (11).

13. Ice-cream dispenser machine according to any one of the preceding claims, wherein the cup-shaped container (3) is substantially cylindrical in shape.

14. Ice-cream dispenser machine according to any one of the preceding claims, wherein the cup-shaped container (3) is dimensioned to contain an amount of ice cream greater than 2 litres.

## Patentansprüche

1. Eine Eiscreme-Ausgabemaschine (1), die Folgendes umfasst: einen becherförmigen Behälter (3), der ausgelegt ist, um das hausgemachte Speiseeis zu enthalten, und der am Boden mit einer Ausgabedüse (4) versehen ist, aus der das Speiseeis austritt; einen Kolben (18), der sich axial gleitend im Inneren des becherförmigen Behälters (3) befindet; manuell gesteuerte Kolbenverschiebungsmittel (19), die dazu ausgelegt sind, den Kolben (18) selektiv innerhalb des becherförmigen Behälters (3) zu bewegen, um das Speiseeis durch die Ausgabedüse (4) aus dem Behälter (3) zu drücken; ein Laufrad bzw. Flügelrad (30), das im Inneren des becherförmigen Behälters (3) angeordnet ist und im Wesentlichen den Boden des Behälters (3) streift (*grazing*), mit der Fähigkeit, sich um eine gegebene Drehachse (R) zu drehen; und eine Motorbaugruppe (31), die dazu ausgelegt ist, das Flügelrad (30) um die genannte Drehachse (R) in Drehung zu versetzen;
wobei die Eiscreme-Ausgabemaschine (1) **dadurch gekennzeichnet ist, dass** die Einlassöffnung der Durchgangsleitung (5), die an der Ausgabedüse (4) endet, auf dem Boden des becherförmigen Behälters (3) in einem gegebenen Abstand vom Flügelrad (30) angeordnet ist; **dass** das genannte Flügelrad (30) mit mindestens einer radialen Schaufel bzw. einem radialen Flügel (32) versehen ist, die sich im Wesentlichen streifend über den Boden des Behälters (3) bis zur Einlassöffnung der genannten Durchgangsleitung (5) erstreckt, sodass sie die genannte Einlassöffnung abschöpft/streift, wenn sich das Flügelrad (30) dreht; **dass** der genannte Flügel (32) so dimensioniert ist, dass er, wenn er über der Einlassöffnung der Durchgangsleitung (5) angeordnet ist, im Wesentlichen die gesamte Fläche der genannten Einlassöffnung abdeckt; **und dass** die Motorbaugruppe (31) so ausgelegt ist, dass sie das Flügelrad (30) im Ruhezustand so anordnet, dass sich der genannte Flügel oder einer der genannten Flügel (32) über die Einlassöffnung der genannten Durchgangsleitung (5) erstreckt.

2. Die Eiscreme-Ausgabemaschine nach Anspruch 1, wobei das Flügelrad (30), axial drehbar, am Boden des genannten becherförmigen Behälters (3) befestigt ist.

3. Die Eiscreme-Ausgabemaschine nach Anspruch 1 oder 2, wobei der genannte Flügel (32) so dimensioniert ist, dass er die Einlassöffnung der Durchgangsleitung (5) erreicht und sich im Wesentlichen darüber hinaus erstreckt.

4. Die Eiscreme-Ausgabemaschine nach irgendeinem der vorstehenden Ansprüche, wobei die Einlassöffnung der Durchgangsleitung (5), die an der Ausgabedüse (4) endet, auf dem Boden des becherförmigen Behälters (3) in einer exzentrischen Position relativ zu einer Längsachse (L) des genannten Behälters (3) angeordnet ist.

5. Die Eiscreme-Ausgabemaschine nach irgendeinem der vorstehenden Ansprüche, wobei der genannte Flügel (32) eine plattenartige Struktur aufweist.

6. Die Eiscreme-Ausgabemaschine nach irgendeinem der vorstehenden Ansprüche, wobei das Flügelrad (30) winkelstarr auf einem Tragzapfen (33) befestigt ist, der sich auf durchquerende Weise durch den Boden des becherförmigen Behälters (3) hindurch erstreckt; und wobei die Motorbaugruppe (31) außerhalb des becherförmigen Behälters (3) angeordnet und dazu ausgelegt ist, den genannten Tragzapfen (33) in Drehung zu versetzen.

7. Die Eiscreme-Ausgabemaschine nach irgendeinem der vorstehenden Ansprüche, wobei die Maschine mit einem Stützrahmen (2) versehen ist und der becherförmige Behälter (3) am genannten Stützrahmen (2) in einer im Wesentlichen vertikalen Position befestigt ist.

8. Die Eiscreme-Ausgabemaschine nach Anspruch 7, wobei die Motorbaugruppe (31) unterhalb des becherförmigen Behälters (2) fest mit dem Stützrahmen (2) verbunden ist.

9. Die Eiscreme-Ausgabemaschine nach Anspruch 7 oder 8, wobei der becherförmige Behälter (3) abnehmbar am genannten Stützrahmen (2) befestigt ist und die Motorbaugruppe (31) über eine auseinanderbaubare mechanische Verbindung mit dem Tragzapfen (33) verbunden ist, sodass sie leicht von dem Tragzapfen (33) abnehmbar ist.

10. Die Eiscreme-Ausgabemaschine nach irgendeinem der vorstehenden Ansprüche, wobei der becherförmige Behälter (3) unterteilt ist in einen geraden rohrförmigen Zylinder (9) und ein Verschlussstück (*breech*) (11), das im Wesentlichen flüssigkeitsdicht am unteren Ende des genannten geraden rohrförmigen Zylinders (9) befestigt/gekoppelt ist, sodass es den Boden des becherförmigen Behälters (3) bildet.

11. Die Eiscreme-Ausgabemaschine nach Anspruch 10, wobei das genannte Verschlussstück (11) mit dem genannten geraden rohrförmigen Zylinder (9) starr und stabil, aber leicht lösbar gekoppelt ist.

12. Die Eiscreme-Ausgabemaschine nach Anspruch 11, wobei die Maschine zusätzlich einen handbetätigten, abnehmbaren Verschluss (12) beinhaltet, der oberhalb des Verschlussstücks (11) nach Art einer Guillotine in den geraden rohrförmigen Zylinder (9) einführbar ist, um den geraden rohrförmigen Zylinder (9) zusätzlich oder alternativ zum Verschluss (11) selektiv im Wesentlichen flüssigkeitsdicht zu verschließen/verstopfen.

13. Die Eiscreme-Ausgabemaschine nach irgendeinem der vorstehenden Ansprüche, wobei der becherförmige Behälter (3) im Wesentlichen zylindrisch ausgebildet ist.

14. Die Eiscreme-Ausgabemaschine nach irgendeinem der vorstehenden Ansprüche, wobei der becherförmige Behälter (3) so dimensioniert ist, dass er eine Eiscreme-Menge von mehr als 2 Litern enthält.

## Revendications

1. Machine de distribution de crème glacée (1) comprenant :
- un réservoir en forme de coupe (3) qui est adapté pour recevoir de la crème glacée de fabrication manuelle, et dont le fond comporte une buse de distribution (4) par laquelle sort la crème glacée ;
- un piston (18) logé en coulissement axial dans le réservoir en forme de coupe (3) ;
- des moyens à commande manuelle (19) d'entraînement du piston, ces moyens étant adaptés pour déplacer sélectivement le piston (18) dans le réservoir en forme de coupe (3) pour pousser la crème glacée du réservoir (3) à travers la buse de distribution (4),
- une hélice (30) à l'intérieur du réservoir en forme de coupe (3), frôlant pratiquement le fond du réservoir (3) avec possibilité de tourner autour d'un axe de rotation (R), et
- un ensemble moteur (31) pour entraîner en rotation l'hélice (30) autour de cet axe de rotation (R),
machine de distribution de crème glacée (1) **caractérisée en ce que**
- l'orifice d'entrée d'un conduit de passage (5) qui se termine par la buse de distribution (4) est situé dans le fond du réservoir en forme de coupe (3) à une distance donnée de l'hélice (30),
- l'hélice (30) est munie d'au moins une lame radiale (32) qui frôle pratiquement le fond du réservoir (3) jusqu'à l'orifice d'entrée du conduit de passage (5), en léchant/frôlant ainsi l'orifice d'entrée lorsque l'hélice (30) tourne,
- la lame (32) est dimensionnée de façon à couvrir pratiquement toute la surface de l'orifice d'entrée lorsqu'elle est au-dessus de l'orifice d'entrée du conduit traversant (5), et
- l'ensemble moteur (31) est prévu pour qu'au repos, la lame ou l'une des lames (32) de l'hélice (30) couvre l'orifice d'entrée du conduit de passage (5).

2. Machine de distribution de crème glacée selon la revendication 1, dans laquelle
l'hélice (30) est fixée de façon à tourner axialement par rapport au fond du réservoir en forme de coupe (3).

3. Machine de distribution de crème glacée selon la revendication 1 ou 2, dans laquelle
la lame (32) est dimensionnée pour atteindre et couvrir pratiquement l'orifice d'entrée du conduit de passage (5).

4. Machine de distribution de crème glacée selon l'une des revendications précédentes,
dans laquelle
l'orifice d'entrée du conduit de passage (5) qui se termine par la buse de distribution (4) est situé au fond du réservoir en forme de coupe (3), en position excentrée par rapport à l'axe longitudinal (L) du réservoir (3).

5. Machine de distribution de crème glacée selon l'une des revendications précédentes,
dans laquelle
la lame (32) a une structure en forme de plaque.

6. Machine de distribution de crème glacée selon l'une quelconque des revendications précédentes,
dans laquelle
l'hélice (30) est fixée de façon solidaire angulairement sur une broche de support (33) qui traverse le fond du réservoir en forme de coupe (3), et
- l'ensemble moteur (31) est placé à l'extérieur du réservoir en forme de coupe (3) et est conçu pour entraîner en rotation la broche de support (33).

7. Machine de distribution de crème glacée selon l'une quelconque des revendications précédentes,
dans laquelle
la machine est munie d'un châssis de support (2) et le réservoir en forme de coupe (3) est fixé au châssis de support (2) dans une position pratiquement verticale.

8. Machine de distribution de crème glacée selon la revendication 7, dans laquelle
l'ensemble moteur (31) est fixé solidement au châssis de support (2) sous le conteneur en forme de coupe (3).

9. Machine de distribution de crème glacée selon la revendication 7 ou 8, dans laquelle
le conteneur en forme de coupe (3) est fixé au châssis de support (2) de manière amovible et l'ensemble moteur (31) est relié à la broche de support (33) par un joint démontable mécaniquement de façon à pouvoir se détacher facilement de la broche de support (33).

10. Machine de distribution de crème glacée selon l'une quelconque des revendications précédentes,
dans laquelle
le conteneur en forme de coupe (3) est divisé en un tonnelet tubulaire droit (9) et une culasse (11) fixée de manière étanche aux liquides/couplée à l'extrémité inférieure du barillet tubulaire droit (9) de manière à former le fond du réservoir en forme de coupe (3).

11. Machine de distribution de crème glacée selon la revendication 10, dans laquelle
la culasse (11) est couplée au tonnelet tubulaire droit (9) d'une façon solidaire et stable et néanmoins facile à détacher.

12. Machine de distribution de crème glacée selon la revendication 11, dans laquelle
la machine comprend en outre un obturateur (12) amovible actionné à la main et qui s'introduit comme une guillotine dans le tonnelet tubulaire droit (9) au-dessus de la culasse (11) de manière à fermer/boucher sélectivement le tonnelet tubulaire droit (9) pratiquement de façon étanche aux liquides en plus ou en variante à la culasse (11).

13. Machine de distribution de crème glacée selon l'une des revendications précédentes,
dans laquelle
le réservoir en forme de coupe (3) est pratiquement de forme cylindrique.

14. Machine de distribution de crème glacée selon l'une quelconque des revendications précédentes,
dans laquelle
le réservoir en forme de coupe (3) est dimensionné pour recevoir un volume de crème glacée supérieur à 2 litres.
